# EUROPÄISCHE PATENTSCHRIFT

(11) **EP 1 640 134 B1**
(45) Veröffentlichungstag und Bekanntmachung des Hinweises auf die Patenterteilung: **17.12.2008**
(21) Anmeldenummer: 05108443.2
(22) Anmeldetag: 14.09.2005
(51) Int. Cl.: B29C 45/16, B29C 45/00, B29C 37/00

(54) **Spritzgussverfahren zum Herstellen von Kunststoff-Bauteilen**
Injection moulding method for producing plastic parts
Procédé de moulage par injection pour produire des composantes en matière plastique

(30) Priorität: 24.09.2004 US 612639; 24.09.2004 CH 15632004
(43) Veröffentlichungstag der Anmeldung: 29.03.2006
(73) Patentinhaber: EMS-Chemie AG, 7013 Domat/Ems (CH)
(72) Erfinder: HALA, Ralf, 88161, Lindenberg (DE); KAISSER, Michael, 7203, Trimmis (CH)
(74) Vertreter: OK pat AG

(56) Entgegenhaltungen:
- WO-A1-94/06612
- FR-A1- 2 750 359
- US-A- 4 330 578
- US-B1- 6 468 458
- PATENT ABSTRACTS OF JAPAN Bd. 012, Nr. 164 (M-698), 18. Mai 1988 (1988-05-18) & JP 62 280016 A (NISSEI PLASTICS IND CO), 4. Dezember 1987 (1987-12-04)
- HOMES W: "KASKADENSPRITZGIESSEN VERMEIDET BINDENAEHTE" KUNSTSTOFFE, CARL HANSER VERLAG. MUNCHEN, DE, Bd. 86, Nr. 9, 1. September 1996 (1996-09-01), Seite 1268,1270,1272, XP000627890 ISSN: 0023-5563
- PATENT ABSTRACTS OF JAPAN Bd. 1997, Nr. 10, 31. Oktober 1997 (1997-10-31) & JP 09 141692 A (MATSUSHITA ELECTRIC WORKS LTD), 3. Juni 1997 (1997-06-03)

## Beschreibung

Die Erfindung betrifft, gemäss einem ersten Aspekt und gemäss dem Oberbegriff des unabhängigen Anspruchs 1, Spritzgussverfahren zum Herstellen von Kunststoff-Bauteilen aus thermoplastisch verarbeitbaren Kunststoff-Formmassen mit zumindest einem Sichtteil und zumindest einem Funktionsteil, wobei die Kunststoff-Formmasse für den Sichtteil eine transparente oder translucente Matrix mit zugemischten Effektpigmenten umfasst, und wobei die Funktionsteile andere physikalische und/oder chemische Kunststoffeigenschaften aufweisen können als die Sichtteile.

Derartige Kunststoff-Bauteile finden insbesondere, jedoch keineswegs ausschliesslich, bei Kraftfahrzeugen - beispielsweise als Aussenspiegelgehäuse - Verwendung. Dabei ist es häufig aus ästhetischen Gründen erforderlich, dass diese Kunststoff-Bauteile mit einer Oberfläche versehen sind, welche in ihrer Farbe bzw. in ihrer optischen Wirkung der Oberfläche eines Fahrzeuges entspricht. Wenn es sich um Oberflächen handelt, die einen Metallic-, Interferenz-, Perlmutt- oder Opaleszenz-Effekt hervorrufen sollen, werden besonders hohe Anforderungen an die die Oberfläche bestimmende Schicht gestellt. Zudem sollen solche Bauteile eine Oberfläche aufweisen, die besonders kratzfest und witterungsbeständig ist. Ausserdem sollen solche Bauteile aber auch besonders gute mechanische Eigenschaften, insbesondere eine hohe Schlagzähigkeit, aufweisen.

Üblicherweise werden solche Kunststoff-Bauteile in einem mehrstufigen Verfahren gefertigt. Dabei werden zunächst Teile aus einem nicht eingefärbten Kunststoff (z.B. durch Spritzgiessen) hergestellt und anschliessend in der gewünschten Farbe lackiert (vgl. z.B. EP 0 764 474). Die Funktion des mechanisch beanspruchten Kerns oder Funktionsteils übernimmt dabei der Kunststoff, die Oberflächenfunktion bzw. der gewünschte optische Effekt wird vom Lack erfüllt. Beide Werkstoffe können so durch entsprechende Auswahl an ihre spezifische Funktion angepasst werden. Vor dem eigentlichen Lackiervorgang müssen die Kunststoffteile regelmässig vorbehandelt (wie z.B. gereinigt, entfettet, ionisiert etc.) werden, damit der Lack haftfähig aufgebracht werden kann. Dadurch ist dieses bekannte Herstellungsverfahren kostenaufwendig und erfordert zudem lange Durchlaufzeiten. Allerdings gelingt es mit diesem Verfahren, optisch einwandfreie Oberflächen zu erzielen, welche völlig frei sind von Unregelmässigkeiten in der Farbverteilung, wie Entmischungsphänomene, Farbstoffagglomerate, Fliesslinien, Schlieren, Wolken und dergleichen.

Aus DE 296 10 374 ist ein Aussenspiegel für Kraftfahrzeuge bekannt, dessen Gehäuse aus einem durchgefärbten Thermoplast hergestellt ist. Obwohl eine Anpassung an die Wagenfarbe gelingen kann, ohne dass eine zusätzliche Lackierung notwendig wäre, sind solche durchgefärbten Kunststoffe meist zu teuer und weisen oft Fliesslinien an den Sichtflächen auf. Zudem zwingt der Aufbau aus einem einzigen Werkstoff den Anwender zu einem Kompromiss zwischen guten Oberflächeneigenschaften und guten mechanischen Eigenschaften des Funktionsteils mit Verstärkungsrippen, Befestigungselementen und dergleichen.

Aus US 6,468,458 ist ein gattungsgemässes Verfahren zum Spritzgiessen von Zweikomponenten- oder Dreikomponenten-Teilen bekannt, welches beispielsweise die folgenden Schritte umfasst: Spritzgiessen und Erstarren lassen der Kunststoff-Formmasse für einen Sichtteil in einer ersten Form mit einer ersten Kavität; Öffnen der ersten Form entlang einer Trennebene; Schliessen einer zweiten Form mit dem in der ersten Form hergestellten Sichtteil in einer zweiten Kavität; Spritzgiessen und Erstarren lassen der Kunststoff-Formmasse eines Funktionsteils auf der Anspritzfläche des Sichtteils; Öffnen der zweiten Form und Entnehmen des Bauteils.

In DE 197 22 551 A1 und in DE 100 01 010 A1 wurde vorgeschlagen, ein Mehrkomponentenbauteil im sogenannten "Monosandwich-Verfahren" herzustellen. Solche Bauteile werden im Mehrkomponentenspritzgussverfahren in einer Werkzeugform produziert, indem beide Komponenten (Haut- und Kernkomponente) in einer Plastifiziereinheit hintereinander geschichtet und dann in einem Einspritzvorgang in die Form eingespritzt werden. Beide Komponenten können auch hier durch entsprechende Auswahl weitgehend an ihre spezifische Funktion angepasst werden. Sollen durch Einbringen von Perlmutt- oder Metallic-Partikeln in die Haut- oder Oberflächenkomponente Effektfarben erzielt werden, so weisen solche Bauteile zu oft störende Fliesslinien an der Oberfläche auf.

Dass insbesondere Fliesslinien und/oder Bindenähte in spritzgegossenen Effektschichten besonders gut sichtbar und deshalb als besonders störend empfunden werden, ist z.B. auch aus JP 2000 327 835 bekannt. Dort wird beschrieben, dass Fliesslinien und/oder Bindenähte in der Effektschicht dadurch entstehen, dass z.B. Metallplättchen durch die Fliessrichtung in der sie umgebenden Matrix eine willkürliche Ausrichtung einnehmen. Fliessen zwei Schmelzefronten zusammen, so bleiben diese durch die unterschiedliche Ausrichtung der Metallplättchen sichtbar. Fliesslinien können durch lokal unterschiedliche Strömungsgeschwindigkeiten oder Strömungsrichtungen in der Effektschicht entstehen. Bindenähte können durch Fliesshindernisse in der Effektschicht entstehen. Jedenfalls beeinträchtigen Fliesslinien und/oder Bindenähte die optische Wirkung von Effektschichten in störendem Ausmass.

Wieder andere (vgl. z.B. US 5,916,643) versuchten, dieses Problem der Fliesslinien und/oder Bindenähte dadurch zu lösen, dass eine tiefgezogene, mit Effektpigmenten bestückte Folie hinterspritzt wurde. Je nach der gewünschten Form des Bauteils und den eingesetzten Effektfarbstoffteilchen kann das elastische Verformen der Folie die Effekte beeinträchtigen, so dass sich den Fliesslinien ähnliche Streifenmuster bemerkbar machen. Zudem ist das Positionieren von Folien in der Spitzform - insbesondere bei hinterschnittenen Geometrien - oft schwierig; ein entstehender Rand kann den optischen Eindruck stören oder muss entfernt bzw. abgedeckt werden.

Die Aufgabe der vorliegenden Erfindung ist es deshalb, ein alternatives Spritzgussverfahren vorzuschlagen, bei dem die hervorragenden Eigenschaften unterschiedlicher Bereiche des Bauteils gewährleistet sind.

Diese Aufgabe wird gemäss einem ersten Aspekt durch die Merkmale des unabhängigen Anspruchs 1 gelöst. Das Spritzgussverfahren umfasst die folgenden Schritte :
a) Spritzgiessen und Erstarren lassen der Kunststoff-Formmasse des zumindest einen Sichtteils mit einer Sichtfläche und einer davon abgewandten Anspritzfläche in einer ersten Form mit einer ersten Kavität, welche durch eine erste Sichtformhälfte und eine erste Anspritzformhälfte definiert wird;
b) Öffnen der ersten Form entlang einer Trennebene durch Wegbewegen der ersten Sichtformhälfte von der ersten Anspritzformhälfte;
c) Schliessen einer zweiten Form mit dem zumindest einen Sichtteil in einer zweiten Kavität, welche durch eine Aufnahmeformhälfte mit dem Sichtteil und eine zweite Anspritzformhälfte definiert wird;
d) Spritzgiessen und Erstarren lassen der Kunststoff-Formmasse des Funktionsteils auf der Anspritzfläche des zumindest einen Sichtteils unter Eingehen einer Verbundhaftung zwischen Sichtteil und Funktionsteil; und
e) Öffnen der zweiten Form und Entnehmen des Bauteils.

Pro Sichtteil - zum Verhindern von Unregelmässigkeiten wie Fliesslinien und/oder Bindenähten - wird eine einzige, strömungsgünstig positionierte Einspritzdüse oder zumindest zwei Einspritzdüsen in einem Kaskadenspritzgussverfahren verwendet, und die Kunststoff-Formmasse für den Sichtteil umfasst zumindest ein transparentes Polymer, das aus einer Gruppe von Polymeren ausgewählt ist, welche aliphatische, cycloaliphatische und/oder aromatische Monomere umfassende Polyamide, Cyclische Olefin-Copolymere, Polymethylmethacrylat, Polymethylmethacrylimid, Polycarbonat sowie Polycarbonatcopolymere und deren Blends, Polystyrol und Acrylnitril-Butadien-Styrol-Polymerisate, Styrolacrylnitril, Acrylnitril-Styrol und andere Styrolcopolymere und deren Blends, Celluloseester, Polyimide und Polyetherimide, Polysulfone und Polyethersulfone, Polyphenylene, Polyacrylate sowie Mischungen oder Blends dieser Polymere umfasst.

Besonders bevorzugte Weiterbildungen des erfindungsgemässen Verfahrens ergeben sich jeweils aus den abhängigen Ansprüchen.

Im Folgenden wird die vorliegende Erfindung an Hand von schematischen Figuren, die den Umfang der Erfindung nur erklären aber nicht einschränken sollen, näher erläutert. Dabei zeigt:
- Fig. 1: Einen Schnitt durch eine geschlossene erste Spritzgussform mit einer ersten Kavität, welche durch eine erste Sichtformhälfte und eine erste Anspritzformhälfte definiert wird;
- Fig. 2: Einen Schnitt durch eine geschlossene zweite Spritzgussform mit einer zweiten Kavität, welche durch eine Aufnahmeformhälfte mit dem Sichtteil und eine zweite Anspritzformhälfte definiert wird.

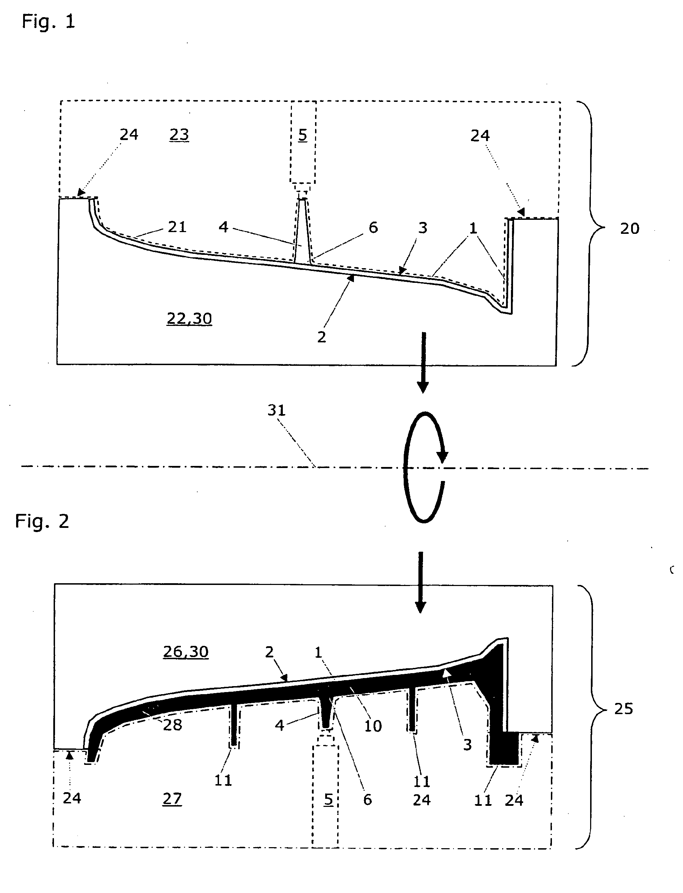

Figur 1 zeigt einen Schnitt durch eine geschlossene erste Spritzgussform für das Ausführen des ersten Schrittes des erfindungsgemässen Spritzgussverfahrens zum Herstellen von Kunststoff-Bauteilen aus thermoplastisch verarbeitbaren Kunststoff-Formmassen.

Diese an sich aus dem Stand der Technik bekannten Formmassen werden zu einem Kunststoff-Bauteil verarbeitet, welches zumindest einen Sichtteil (1) und zumindest einen Funktionsteil (10) umfasst, wobei die Kunststoff-Formmasse für den Sichtteil (1) eine transparente oder translucente Matrix mit zugemischten Effektpigmenten umfasst. Die Effektfarbstoffteilchen bzw. Effektpigmente werden z.B. als Farbkonzentrat vorgemischt und als Masterbatch oder Flüssigdispersion in den Einzug einer Spritzgussschnecke dosiert. Alternativ dazu wird vor dem Spritzgiessen (z.B. durch Compoundieren) ein entsprechendes Kunststoff-Granulat hergestellt und dieses Granulat so an der Spritzgussmaschine eingesetzt. Die Funktionsteile (10) können dabei andere physikalische und/oder chemische Kunststoffeigenschaften aufweisen als die Sichtteile (1). Sichtteil(e) (1) und Funktionsteil(e) (10) können aber auch eine identische Polymermatrix aufweisen.

### Wesentliche Eigenschaften eines Sichtteils (1) umfassen dabei folgende Aspekte:

Hohe Beständigkeit gegenüber Ultraviolettbestrahlung, Hitze, Licht, Feuchtigkeit, Kälte und Chemikalien; hohe Kratzfestigkeit, hohe Schlagzähigkeit und hoher Glanz. Die Effektpigmente rufen, falls sie in einer solchen Matrix verteilt sind, einen Metallic- oder einen Interferenzeffekt, wie z.B. einen Perlmutt-Effekt hervor. Je durchscheinender oder transparenter diese Matrix ist, desto klarer kommt der Farbeffekt, insbesondere ein Glitzern der einzelnen Effektteilchen, zur Geltung. Die Tiefenwirkung der Effektpigmente hängt von der Transparenz der Matrix ab. Es können aber auch nur unvollkommen transparente oder durchscheinende, d.h. translucente Matrixmaterialen eingesetzt werden. Wahlweise können der Kunststoff-Formmasse für den Sichtteil (1) auch andere Farbstoffe beigemischt werden, so dass z.B. eine beliebige, den Effektpigmenten angepasste, transparente Farbtönung erzielt werden kann.

Im Zusammenhang mit der vorliegenden Erfindung werden Effektpigmente als in einer Polymermatrix vorliegende, unlösliche Partikel definiert. Solche Effektpigmente reflektieren oder absorbieren einfallende elektromagnetische Wellen (insbesondere im sichtbaren Wellenlängenbereich, im UV- oder IR- bzw. NIR- Bereich) oder beeinflussen diese Wellen in irgend einer Weise. So können NIRempfindliche Additive z.B. beim Laserschweissen oder Laserbeschriften von Kunststoffen verwendet werden.

Als Effektpigmente sind z.B. Metallteilchen, Aluminium/Bronze-Pulver, Interferenzpigmente, natürliche (ungefärbte) und farbig lackierte Aluminiumflitter und mineralischer Glimmer speziell für den Einsatz in transparenten Kunststoffen bekannt (siehe Schäfer/Küsters im Kapitel 1.3: Rohstoffe für Masterbatches in FARB- UND ADDITIV- MASTERBATCHES IN DER PRAXIS, 2003 herausgegeben vom Masterbatch Verband im Verband der Mineralfarbenindustrie e.V., Frankfurt am Main, Deutschland). Auch diese Autoren weisen auf das Auftreten von Fliessnähten beim Einsatz von extrem feinen Perleffektpigmenten hin. Aluminium- und Goldbronze Pigmente sind z.B. unter dem Handelsnamen PHOENIX® (ECKERT GmbH & Co. KG, Fürth, Deutschland) erhältlich.

Keramik-Effektfarben; Duftfarben; Fluoreszenzfarben; Tagesleuchtfluoreszenzfarben; Infrarotfluoreszenzfarben; Photoreaktive Farben, welche den Farbton unter UV-Bestrahlung wechseln; sowie Thermionic-Farben, welche ihren Farbton bei Temperaturveränderung wechseln, werden unter dem Handelsnamen COLORLINE® durch die Firma COLORTEK Farbsysteme GmbH, Karstädt, Deutschland, vertrieben und können als Effektpigmente eingesetzt bzw. den Effektpigmenten nach Erfordernis beigemischt werden.

Zudem sind Perlglanzpigmente bzw. Perlmuttpartikel bekannt, welche für den gleichen Zweck im Sichtteil (1) eingesetzt werden können; in solchen Fällen wird eine Dunkelfärbung des Funktionsteils (10) bevorzugt. Speziell bevorzugt sind Metallicpigmente, insbesondere Aluminiumflitter (vgl. EP 0 994 915), oder Perlmuttpartikel. Auch beliebige Mischungen dieser Effektpartikel sind einsetzbar. Die Effektpartikel werden bevorzugt als Farbkonzentrat vorgemischt und als Masterbatch oder Flüssigdispersion in den Einzug einer Spritzgussschnecke dosiert (nicht gezeigt).

Die Kunststoff-Formmasse für den Sichtteil (1) umfasst bevorzugt zumindest ein transparentes Polymer, das aus einer Gruppe von Polymeren ausgewählt ist, welche aliphatische, cycloaliphatische und/oder aromatische Monomere umfassende Polyamide, wie PA MACM 12, PA PACM 12 (vgl. jeweils auch die veröffentlichte Patentanmeldung JP 11 279 289); COC (Cyclische Olefin-Copolymere); PMMA (Polymethylmethacrylat); PMMI (Polymethylmethacrylimid); PC (Polycarbonat) sowie Polycarbonatcopolymere und deren Blends; PS (Polystyrol) und ABS (Acrylnitril-Butadien-Styrol-Polymerisate); SAN (Styrolacrylnitril); ASA (Acrylnitril-Styrol) und andere Styrolcopolymere und deren Blends; Celluloseester, wie z.B. CA, CP und CAB; PI (Polyimide) und PEI (Polyetherimide), Polysulfone und Polyethersulfone (PES,PSU,PPSU), Polyphenylene (PPO, PPE), Polyacrylate (PAR) sowie Mischungen oder Blends dieser Polymere umfasst.

Vorzugsweise werden für die erfindungsgemässen Formmassen bzw. für das erfindungsgemässe Verfahren auch an sich bekannte transparente Polyamide (die auch in Form von Copolyamiden vorliegen können) verwendet, welche beispielsweise aus Monomeren ausgewählt aus folgender Gruppe hergestellt sind:
- verzweigte oder unverzweigte aliphatische Diamine mit 6 bis 14 C-Atomen, wie z.B. 1.6-Hexamethylendiamin, 2-Methyl-1.5-diaminopentan, 2.2.4-Trimethylhexamethylendiamin, 1.9-Nonamethylendiamin, 1.10-Decamethylendiamin, oder 1.12-Dodecamethylendiamin;
- cycloaliphatische Diamine mit 6 bis 22 C-Atomen, wie z.B. 4.4'-Diaminodicyclohexylmethan, 3.3'-Dimethyl-4.4'-diaminodicyclohexylmethan, 4.4'-Diaminodicyclohexylpropan, 1.4-Diaminocyclohexan, 1.4-Bis(aminomethyl)-cyclohexan, 2.6-Bis(aminomethyl)-norbornan oder 3-Aminomethyl-3.5.5-trimethylcyclohexylamin;
- araliphatische Diamine mit 8 bis 22 C-Atomen, wie z.B. m- oder p-Xylylendiamin oder Bis(4-aminophenyl)propan;
- verzweigte oder unverzweigte aliphatische Dicarbonsäuren mit 6 bis 22 C-Atomen, wie z.B. Adipinsäure, 2.2.4- bzw. 2.4.4-Trimethyladipinsäure, Azelainsäure, Sebacinsäure oder 1.12-Dodecandisäure;
- cycloaliphatische Dicarbonsäuren mit 6 bis 22 C-Atomen, wie z.B. Cyclohexan-1,4-dicarbonsäure, 4.4'-Dicarboxyldicyclohexylmethan, 3.3'-Dimethyl-4.4'-dicarboxyldicyclohexylmethan, 4.4'-Dicarboxyldicyclohexylpropan und 1.4-Bis(carboxymethyl)cyclohexan;
- araliphatische Dicarbonsäuren mit 8 bis 22 C-Atomen, wie z.B. 4.4'-Diphenylmethandicarbonsäure;
- aromatische Dicarbonsäuren mit 8 bis 22 C-Atomen, wie z.B. Isophthalsäure, Tributylisophthalsäure, Terephthalsäure, 1.4-, 1.5-, 2.6- bzw. 2.7-Naphthalindicarbonsäure, Diphensäure oder Diphenylether-4,4'-dicarbonsäure;
- Lactame mit 6 bis 12 C-Atomen bzw. die entsprechenden ω-Aminocarbonsäuren, wie z.B. ε-Caprolactam, ε-Aminocapronsäure, Capryllactam, ω-Aminocaprylsäure, ω-Aminoundecansäure, Laurinlactam oder ω-Aminododecansäure.

Besonders bevorzugt sind dabei transparente Homopolyamide wie PA MACM 12 und PA PACM 12 sowie die transparenten Copolyamide PA 12/MACMI und PA MACM/PACM 12 sowie Mischungen oder Blends derselben. Ganz speziell bevorzugt ist PA MACM/PACM 12, welches aus EP 1 369 447 bekannt ist.
Auch aus teilkristallinen Polymeren, wie z.B. Polypropylen, gesättigten linearen Polyestern (z.B. PET) und linearen aliphatischen Polyamiden (z.B. PA 6, PA 66, Mischungen aus PA 6 und PA 66, PA 11, PA 12) können unter geeigneten Prozess- bzw. Abkühlbedingungen und/oder Herstellen geeigneter Schichtdicken, translucente oder gar transparente, erfindungsgemässe Sichtteile (1) hergestellt werden.

Handelsübliche Additive, wie beispielsweise Weichmacher, Antistatika, Flammschutzmittel, Füllstoffe, Farbstoffe, Duftfarben bzw. Duftstoffe, Stabilisatoren (z.B. Hitze- und UV-Stabilisatoren und/oder UV-Absorber) und Pigmente werden der Kunststoff-Formmasse für den Sichtteil (1) je nach Erfordernis beigemischt. In Frage kommen auch Verstärkungsmittel, wie Glasfasern, Glaskugeln und mineralische Zuschlagstoffe (insbesondere nanoskalige Mineralien bzw. Nanocomposites), solange der optische Eindruck des Sichtteils dadurch nicht gestört wird.

Figur 2 zeigt einen Schnitt durch eine geschlossene zweite Spritzgussform mit einer zweiten Kavität, welche durch eine Aufnahmeformhälfte bzw. eine gemeinsame Sichtformhälfte mit dem Sichtteil und eine zweite Anspritzformhälfte definiert wird.

Wesentliche Eigenschaften eines Funktionsteils (10) umfassen dabei folgende Aspekte:

Hohe Schlagzähigkeit, mechanische Steifheit, Formbeständigkeit, und Dimensionsstabilität. Gute Verträglichkeit (Kompatibilität) mit der Kunststoff-Formmasse des Sichtteils (1). Ausreichende mechanische Festigkeit, hervorragende Kriechbeständigkeit, hohe Temperaturbeständigkeit. Gegebenenfalls sind auch elektrische Eigenschaften zu berücksichtigen.

Für die Herstellung des Funktionsteils (10) eignen sich spritzgussfähige Thermoplaste aus der Gruppe der Polyamide, Polyester, Polyolefine bzw. Polycarbonate oder thermoplastische Elastomere, wie z.B. TPU (thermoplastisches Polyurethan), Styrolblockcopolymere, wie z.B. SEBS (Styrolethylenbutadienstyrol), SBS (Styrolbutadienstyrol), Polyesterelastomere, Polyetherelastomere, Polyetheresterelastomere (TEEE); Silikone, die hinterher vernetzt werden; ABS (Acrylnitril-Butadien-Styrol-Polymerisate) oder PVC. Thermoplastische Elastomere werden insbesondere dann verwendet, wenn der Funktionsteil eine Dichtung darstellt. Es ist auch möglich, den Funktionsteil (10) aus Blends oder den Recycling-Produkten der eben genannten Polymere oder aus deren untereinander verträglichen oder verträglich gemachten Blends herzustellen.

Handelsübliche Additive, wie Schlagzähmodifikatoren, Stabilisatoren (z.B. UV- und Hitzestabilisatoren), Weichmacher, Farbstoffe, Flammschutzmittel, Füllstoffe, Verstärkungsmittel (z.B. Glasfaser, Kohlefasern, Glimmer, Glaskugeln) und/oder Pigmente werden der Kunststoff-Formmasse für den Funktionsteil (10) je nach Erfordernis beigemischt.

Nachdem einmal das Material für den Sichtteil (1) festgelegt worden ist, wird mit Blick auf eine gute Verbundhaftung vorzugsweise ein Material für den Funktionsteil (10) ausgewählt, welches der selben Polymerklasse angehört, oder welches gar identisch ist mit dem Polymer des Sichtteils (1). Wenn z.B. für den Sichtteil PA MACM 12 (erhältlich bei EMS-Chemie AG, Domat/Ems, Schweiz, unter dem Namen Grilamid® TR 90) ausgewählt wird, wird in Bezug auf die gute Verbundhaftung für das Herstellen des Funktionsteils z.B. vorzugsweise ein PA MACM 12 GF 40 (Formmasse aus Grilamid® TR 90 mit 40% Glasfaseranteil) verwendet, welches unter dem Handelsnamen Grilamid® TRV-4X9 bei EMS-Chemie AG, Domat/Ems, Schweiz erhältlich ist.

Zum bereits erwähnten Sichtteil (1) aus Grilamid® TR 90 kann alternativ ein stofflich unterschiedliches Polymer als Kunststoff-Formmasse für den Funktionsteil (10) verwendet werden, nämlich z.B. ein glaskugelverstärktes Polyamid 12, d.h. beispielsweise ein PA 12 GK 50 (Formmasse aus Polyamid 12 mit 50% Glaskugelanteil). Als Kunststoff-Formmasse für den Funktionsteil (10) sind auch Blends geeignet, bei denen zumindest eine der Blendkomponenten für die Verbundhaftung zum Sichtteil (1) sorgt. Bevorzugt ist dabei diese Blendkomponente identisch mit einer Polymerkomponente des Sichtteils.

Falls Sichtteil (1) und Funktionsteil (10) ganz oder teilweise zueinander unverträglich sein sollten, d.h. eine naturgemäss ungenügende Verbundhaftung eingehen, kann ihre Verträglichkeit mit haftungsvermittelnden Modifikatoren wie beispielsweise Polyolefinen mit reaktiven Gruppen verbessert werden (vgl. EP 0 393 409 B1), die der Formmasse des Funktionsteils und/oder der Formmasse des Sichtteils zugemischt werden.

Das erfindungsgemässe Spritzgussverfahren zum Herstellen von Kunststoff-Bauteilen aus thermoplastisch verarbeitbaren Kunststoff-Formmassen mit zumindest einem Sichtteil (1) und zumindest einem Funktionsteil (10), wobei die Kunststoff-Formmasse für den Sichtteil (1) eine transparente oder translucente Matrix mit zugemischten Effektpigmenten umfasst, und wobei die Funktionsteile (10) andere physikalische bzw. chemische Kunststoffeigenschaften aufweisen können als die Sichtteile (1), umfasst die bereits definierten Schritte a)-e) und ist dadurch gekennzeichnet, dass pro Sichtteil (1) - zum Verhindern von Unregelmässigkeiten wie Fliesslinien und/oder Bindenähten - eine einzige, strömungsgünstig positionierte Einspritzdüse (5) oder zumindest zwei Einspritzdüsen in einem Kaskadenspritzgussverfahren verwendet werden, und dass die Kunststoff-Formmasse für den Sichtteil (1) zumindest ein transparentes Polymer umfasst, das aus einer Gruppe von Polymeren ausgewählt ist, welche aliphatische, cycloaliphatische und/oder aromatische Monomere umfassende Polyamide, Cyclische Olefin-Copolymere, Polymethylmethacrylat, Polymethylmethacrylimid, Polycarbonat sowie Polycarbonatcopolymere und deren Blends, Polystyrol und Acrylnitril-Butadien-Styrol-Polymerisate, Styrolacrylnitril, Acrylnitril-Styrol und andere Styrolcopolymere und deren Blends, Celluloseester, Polyimide und Polyetherimide, Polysulfone und Polyethersulfone, Polyphenylene, Polyacrylate sowie Mischungen oder Blends dieser Polymere umfasst.

Es ist offensichtlich, dass der Sichtteil (1) mit einer Sichtfläche (2) und einer davon abgewandten Anspritzfläche (3) in Schritt a) spritzgegossen und erstarren gelassen wird. Dies wird in einer ersten Kavität (21) vollzogen (siehe Fig. 1), welche durch eine erste Sichtformhälfte (22, ausgezogene Linie) und eine erste Anspritzformhälfte (23, gestrichelte Linie) definiert wird. Für diesen Schritt a) ergeben sich somit - je nach räumlicher Ausrichtung - die folgenden Anordnungen der beiden Formhälften:

| | | | |
|---|---|---|---|
| (23) (22) | bzw. (22) (23) | oder **(23)** | bzw. (22) |
| | | **(22)** | (23). |

Die in Figur 1 gewählte, bevorzugte Anordnung, bei welcher die Sichtformhälfte (22) unten und die Anspritzformhälfte (23) darüber angeordnet wird, ist hier fett markiert. Selbstverständlich können die Formhälften (22,23) auch sämtliche, von der Senkrechten oder Waagrechten abweichenden Lagen einnehmen.

Der Sichtteil (1) wird mit einer im wesentlichen gleichmässigen Schichtdicke hergestellt. Dies kann - je nach Geometrie des zu formenden Sichtteils (1) - unter Verwendung von nur einer Einspritzdüse (5) geschehen, welche jedoch immer auf der von der Sichtfläche (2) abgewandten Seite angeordnet sein muss. Soll nur eine einzige Einspritzdüse (5) verwendet werden, so kommt hier ein wesentlicher Vorteil des erfindungsgemässen Verfahrens zum Tragen: Die Lage der Anspritzstelle (6) kann optimal im Hinblick auf ein strömungsgünstiges und gleichmässiges Füllen der Kavität gewählt werden, so dass keine Unregelmässigkeiten wie Fliesslinien und/oder Bindenähte entstehen. Diese Anspritzstelle (6) kann somit mitten in einem an sich heiklen und am fertigen Kunststoff-Bauteil gut sichtbaren Teil platziert werden: Das strömungsgünstige Füllen der Kavität ermöglicht eine so gleichmässige Verteilung der Kunststoff-Formmasse mit den zugemischten Effektpartikeln, dass diese Anspritzstelle (6) am fertigen Bauteil nicht erkennbar ist. Zudem wird durch die im wesentlichen gleichmässige Dicke des Sichtteils (1) ein homogener optischer Eindruck und eine gleichmässige Farbtiefe und Deckkraft erzeugt. Diese Deckkraft kann durch ein Einfärben des den Sichtteil (1) tragenden Funktionsmaterials erhöht werden.

Alternativ dazu können, vor allem bei strömungsungünstigen Fliessweg/Wanddickenverhältnissen bzw. Bauteilegeometrien, zumindest zwei Einspritzdüsen (5) in einem Kaskadenspritzgussverfahren verwendet werden (nicht gezeigt). Dabei ist darauf zu achten, dass alle Einspritzdüsen (5) auf der von der Sichtfläche (2) abgewandten Seite angeordnet sind, und dass zuerst und so lange nur über eine Düse eingespritzt wird, bis die Schmelzefront zumindest eine weitere Anspritzstelle passiert hat. Jede weitere Anspritzstelle, welche diese Bedingung erfüllt, kann dann in Betrieb genommen und der Sichtteil (1) fertiggespritzt werden.

Anschliessend wird in Schritt b) diese ersten Form (20) entlang einer Trennebene (24) durch Wegbewegen (Pfeilrichtung in Fig. 1) der ersten Sichtformhälfte (22) von der ersten Anspritzformhälfte (23) geöffnet. Diese Trennebene verläuft bevorzugt im wesentlichen rechtwinklig zu den Holmen des Maschinenrahmens. In Figur 1 verläuft diese Trennebene im wesentlichen horizontal, d.h. rechtwinklig zur vertikalen Bewegung der ersten Sichtformhälfte (22).

Darauf wird in Schritt c) eine zweite Form (25) mit einer zweiten Kavität (28) mit dem darin enthaltenen Sichtteil (1) geschlossen (vgl. Pfeil in Fig. 2), welche durch eine Aufnahmeformhälfte (26) mit dem Sichtteil (1) und eine zweite Anspritzformhälfte (27) definiert wird. Es werden bevorzugt zumindest zwei gemeinsame Sichtformhälften (30,30') nebeneinander und/oder gegenüberliegend verwendet und damit die Produktivität der Spritzgussanlage entsprechend gesteigert. Es können aber auch drei, vier oder mehr gemeinsame Sichtformhälften (30,30',30", 30"' ...) vorgesehen sein.

Der erkaltete Sichtteil wird (1) aus der ersten Sichtformhälfte (22) entnommen und in die Aufnahmeformhälfte (26) derselben oder einer weiteren Spritzgussmaschine eingelegt werden. Dies kann automatisch bzw. robotisiert oder auch manuell geschehen. Das Herausnehmen aus der ersten Sichtformhälfte (22) und das Einlegen in die Aufnahmeformhälfte (26) wird bevorzugt mittels Fassen zumindest eines am Sichtteil (1) stehen gelassenen Angusszapfens (4) ausgeführt. Der Sichtteil (1) wird beim Einlegen in die Aufnahmeformhälfte (26) vorzugsweise mittels zumindest eines am Sichtteil (1) stehen gelassenen Angusszapfens (4) zentriert. Die Aufnahmeformhälfte (26) weist bevorzugt eine Kontur auf, welche auf den Sichtteil (1) abgestimmt ist. Falls man mit Heisskanalgeräten arbeitet, entstehen diese Angusszapfen (4) unter Umständen nicht, so dass in solchen Fällen andere Entnahme- bzw. Zentrierhilfen verwendet werden sollen.

In Schritt d) wird der Funktionsteil (10) auf der Anspritzfläche (3) des Sichtteils (1) unter Eingehen einer Verbundhaftung zwischen Sichtteil (1) und Funktionsteil (10) spritzgegossen und erstarren gelassen.

Durch Umlegen des Sichtteils (1) von einer ersten Sichtformhälfte (22) in eine Aufnahmeformhälfte (26) ergeben sich entsprechend:

| | | |
|---|---|---|
| (23) (22) | → | (26) (27) |
| (27) (26) | ← | (22) (23); |

oder

| | | |
|---|---|---|
| **(23)** | bzw. | (27) |
| **(22)** | | (26) |
| **↓** | | ↑ |
| **(26)** | | (22) |
| **(27)** | | (23) |

Die in den Figuren 1 und 2 gewählte Anordnung ist hier fett markiert. Selbstverständlich können die Formhälften (22,23,30) auch sämtliche, von der Senkrechten oder Waagrechten abweichenden Lagen einnehmen.

Endlich wird nun in einem letzten Schritt e) die zweite Form (25) geöffnet und das Bauteil entnommen.

Allgemein wird bevorzugt, die Effektfarbstoffteilchen bzw. Effektpigmente als Farbkonzentrat vorzumischen und als Masterbatch oder Flüssigdispersion in den Einzug einer Spritzgussschnecke zu dosieren. Alternativ wird bevorzugt, durch Compoundieren vor dem Spritzgiessen ein entsprechendes Kunststoff-Granulat herzustellen und dieses Granulat so an der Spritzgussmaschine einzusetzen.
Das erfindungsgemässe Spritzgussverfahren kann verwendet werden, um die unterschiedlichsten Kunststoff-Bauteile herzustellen. Allen mit dem erfindungsgemässen Spritzgussverfahren hergestellten Kunststoff-Bauteilen ist gemeinsam, dass sie eine oder mehrere Sichtflächen (2) aufweisen, welche einen hohen Glanz und zumindest einen Sichtteil (1) mit eingelagerten bzw. zugemischten Effektpigmenten umfassen.

Dieses erfindungsgemässe Verfahren eignet sich gleichermassen für das Produzieren beliebiger mehrschichtiger Kunststoffbauteile, welche eine optisch hochwertige Sichtfläche aufweisen sollen. Dazu gehören matte, satinierte und glänzende Oberflächen.

Das erfindungsgemässe Verfahren kann für das Herstellen von Formteilen verwendet werden, welche als Sichtteil (1) eine Effektschicht mit Effektpigmenten umfassen, zu denen im Rahmen der vorliegenden Erfindung auch eingelagerte Dekorationsmittel, wie farbige Kunststoffgranulate, Farbpigmente, Farbplättchen, Farbstreifen, Metallstaub, Metallflitter, gefärbte Glaskugeln, keramische Stoffe, faserförmige Stoffe und ähnliches gezählt werden.

Als keinesfalls abschliessende Aufzählung werden hier einige bevorzugte Beispiele von Produkten genannt, die mit dem erfindungsgemässen Verfahren hergestellt werden können:
- Gehäuse, Gehäuseteile und andere Teile von Elektro-, Elektronik-, Telekommunikations-, Sicherheitstechnik-, Medizinaltechnik-, Haushalts- oder Körperpflegegeräten. Solche Geräte umfassen z.B. Kameras, Kaffeemaschinen, Handys und deren Schalen; Rasierapparate; Stromschalter; Radios, Fernseher und Computer sowie deren Zubehöre, Tasten und Bildschirme; Mixer und Haarföne.
- Sport- und Freizeitgeräte, Modeaccessoires, Spielzeuge oder Teile davon, wie z.B. Skis, Skibindungen, Snowboards, Surfboards, Skihelme, Fahrrad- und Motorradhelme, Tennisschläger usw.
- Designelemente, welche innen oder aussen an Bauten, Verkehrswegen oder Fahrzeugen (wie Fahrräder, Motorräder, Kraft- und Schienenfahrzeuge, Schiffe und Flugzeuge) anzubringen sind, wie Deckenplatten, Küchenabdeckungen, Spiegelrahmen, Verkleidungselemente, Beleuchtungskörper, Zierleisten und Zierkappen; Verglasungen (z.B. Automobilverscheibungen), Raddeckel, Akustik- und Spiegelschalen, Blenden, B-Säulenabdeckungen für Autos, Türgriffe, Griffmulden, Spoiler, Antennen, Scheibenwischerarme, fluoreszierende Pannendreiecke und andere Verkehrs-Signale bzw. Signaltafeln; im weissen Licht oder im Infrarotlicht fluoreszierende Nummernschilder; diverse Haushaltsgegenstände, wie Griffe und Armaturen aller Art, z.B. Tür- und Fenstergriffe, Kleiderhaken und Kleiderbügel; sanitäre Armaturen und Apparate sowie sanitäre Artikel, wie Wasserhangriffe, Seifenschalen, Toilettengarnituren und dergleichen.
- Optische Hilfsmittel, wie Brillengläser mit photoreaktiven Farben, optische Filter, Brillengestelle, Sonnenbrillenscheiben; Schutzschilder und Visiere zum Augenschutz (z.B. an Helmen); spritzgegossene Verglasungen aller Art.
- Möbel und Möbelteile, wie Tische, Stühle, Armlehnen und Tischblätter; Verpackungsteile, wie Deckel von Dosen und Flaschen bzw. Fläschchen (z.B. für Getränke oder Parfum), Spraydosen oder Tuben sowie Dosen oder Tuben selbst.

Ein spezielles Merkmal der erfindungsgemäss hergestellten Kunststoff-Bauteile besteht wie beschrieben darin, dass der Sichtteil (1) durch Spritzgiessen hergestellt ist und eine Sichtfläche (2) und eine davon abgewandte Anspritzfläche (3) mit zumindest einer Anspritzstelle (6) aufweist, wobei der Funktionsteil (10) des Kunststoff-Bauteils auf die Anspritzfläche (3) des zuvor erstarrten Sichtteils (1) spritzgegossen ist. Alle erfindungsgemäss hergestellten Kunststoff-Bauteile weisen also einen Sichtteil (1) mit im wesentlichen gleichmässiger Schichtdicke auf, wobei die Rückseite des Sichtteils (1) eine Anspritzstelle (6) aufweist. Diese Anspritzstelle kann als Angusszapfen (4) ausgebildet sein, welcher beim zweiten Spritzguss für den Funktionsteil (10) um- oder überspritzt wird.

Funktionsteile (10) zeichnen sich dadurch aus, dass sie Funktionselemente (11) in Form von Befestigungselementen, wie z.B. Gewinden, Schnapphaken, Federn oder Stiften bzw. Distanzhaltern wie z.B. Noppen oder Domen aufweisen. Sie können auch Verstärkungselemente wie z.B. Rippen oder Gitter und/oder Dichtelemente, wie z.B. Lippendichtungen umfassen. Funktionselemente (10) umfassen zudem Hinterschneidungen und Durchbrüche. Meistens sind weder Funktionsteil (10) noch Funktionselemente (11) am Endprodukt sichtbar.

Besondere, vorzugsweise an der Rückseite eines Funktionsteils (10) angeordnete Funktionselemente (11) stellen schwingungsbeeinflussende Massen dar, welche die Resonanzfrequenz der gesamten, aus Sichtteilen (1) und Funktionsteilen (10) bestehenden Kunststoff-Bauteile verschieben oder an Orten mit der grössten Schwingungsamplitude dämpfend wirken. Das Schwingungsverhalten derartiger Kunststoff-Bauteile kann bereits im Entwicklungsstadium am Computer simuliert und auf diese Weise günstig beeinflusst werden. Dies gilt z.B. für Fahrzeugverschalungen, wie Auto-Kotflügel, Motorhauben, Schiebedächer, Sonnendächer, Kofferraumdeckel und dergleichen, die im Gebrauch durch Erschütterungen und/oder durch den Fahrtwind dynamischen Beanspruchungen unterworfen sind und sich nicht gleich verhalten wie entsprechende Fahrzeugteile aus anderem Material wie z.B. Metall.

Funktionselemente (11) aus Kunststoff können auch Metallteile, wie Gewindebolzen oder Federn umfassen, welche vor dem Spritzgussvorgang in die zweite Spritzgussform (25) eingelegt oder auch nach dem Spritzgiessen in den Funktionsteil (10) eingesetzt werden.

Grundsätzlich können die erfindungsgemässen Kunststoff-Bauteile einen oder mehrere Sichtteile (1) aufweisen und aus zwei oder mehr Komponenten aufgebaut sein. Solche Bauteile können einen oder auch mehrere Funktionsteile (10) umfassen. Zusätzlich können auf oder an den Funktionsteilen (10), insbesondere auf der vom Sichtteil (1) abgewandten Seite, weitere Elemente, wie Polster, Dichtungen, Dämm-Matten usw. angebracht bzw. angeordnet, insbesondere angeschäumt, anvulkanisiert oder angespritzt werden.

Bei der Verwendung des erfindungsgemässen Spritzgussverfahrens hat sich gezeigt, dass Kunststoff-Bauteile mit hochglänzenden Oberflächen im Sichtteil hergestellt werden können, die - dank den zugemischten Effektpigmenten - einen Metallic-, Interferenz-, Perlmutt- oder Opaleszenz-Effekt hervorrufen und frei sind von Entmischungsphänomenen, Farbstoffagglomeraten, Fliesslinien, Fliessnähten, Schlieren, Wolken und Bindenähten.

Das erfindungsgemässe Verfahren findet sinngemäss auch in der Spritzprägetechnik Anwendung, bei welcher es sich bekannterweise um eine Sonderform eines Spritzgussprozesses handelt. Durch Einsatz der Spritzprägetechnik kann die Oberflächenqualität und die Abbildegenauigkeit des Sichtteils (1) beim Spritzgiessen erfindungsgemässer Kunststoff-Bauteile noch weiter gesteigert werden.

## Patentansprüche

1. Zweischicht-Spritzgussverfahren zum Herstellen von Kunststoff-Bauteilen, die in ihrem Querschnitt aus einem Sichtteil (1) und einem Funktionsteil (10) bestehen, aus thermoplastisch verarbeitbaren Kunststoff-Formmassen, mit zumindest einem Sichtteil (1) und zumindest einem Funktionsteil (10), wobei die Kunststoff-Formmasse für den Sichtteil (1) eine transparente oder translucente Matrix mit zugemischten Effektpigmenten umfasst, wobei das Spritzgussverfahren die folgenden Schritte umfasst:
(a) Spritzgiessen und Erstarren lassen der Kunststoff-Formmasse des zumindest einen Sichtteils (1) mit einer Sichtfläche (2) und einer davon abgewandten Anspritzfläche (3) in einer ersten Form (20) mit einer ersten Kavität (21), welche durch eine erste Sichtformhälfte (22) und eine erste Anspritzformhälfte (23) definiert wird;
(b) Öffnen der ersten Form (20) entlang einer Trennebene (24) durch Wegbewegen der ersten Sichtformhälfte (22) von der ersten Anspritzformhälfte (23);
(c) Schliessen einer zweiten Form (25) mit dem zumindest einen Sichtteil (1) in einer zweiten Kavität (28), welche durch eine Aufnahmeformhälfte (26) mit dem Sichtteil (1) und eine zweite Anspritzformhälfte (27) definiert wird;
(d) Spritzgiessen und Erstarren lassen der Kunststoff-Formmasse des Funktionsteils (10) auf der Anspritzfläche (3) des zumindest einen Sichtteils (1) unter Eingehen einer Verbundhaftung zwischen Sichtteil (1) und Funktionsteil (10); und
(e) Öffnen der zweiten Form (25) und Entnehmen des Bauteils,
**dadurch gekennzeichnet, dass** die Aufnahmeformhälfte (26) von der ersten Sichtformhälfte (22) verschieden ist und der Sichtteil (1) nach dem ersten Spritzgssvorgang gemäss Schritt (a) aus der ersten Sichtformhälfte (22) herausgenommen und für den zweiten Spritzgussvorgang gemäss Schritt (d) in die Aufnahmeformhälfte (26) eingelegt wird, wobei pro Sichtteil (1), zum Verhindern von Unregelmässigkeiten wie Fliesslinien und/oder Bindenähten, eine einzige, strömungsgünstig positionierte Einspritzdüse (5) oder zumindest zwei Einspritzdüsen in einem Kaskadenspritzgussverfahren verwendet werden, und dass die Kunststoff-Formmasse für den Sichtteil (1) zumindest ein transparentes Polymer umfasst, das aus einer Gruppe von Polymeren ausgewählt ist, welche aliphatische, cycloaliphatische und/oder aromatische Monomere umfassende Polyamide, Cyclische Olefin-Copolymere, Polymethylmethacrylat, Polymethylmethacrylimid, Polycarbonat sowie Polycarbonatcopolymere und deren Blends, Polystyrol und Acrylnitril-Butadien-Styrol-Polymerisate, Styrolacrylnitril, Acrylnitril-Styrol und andere Styrolcopolymere und deren Blends, Celluloseester, Polyimide und Polyetherimide, Polysulfone und Polyethersulfone, Polyphenylene, Polyacrylate sowie Mischungen oder Blends dieser Polymere umfasst, wobei der Sichtteil (1) mit einer im wesentlichen gleichmässigen Schichtdicke und dünner als der diesen Sichtteil (1) tragende und stabilisierende Funktionsteil (10) hergestellt wird.

2. Zweischicht-Spritzgussverfahren gemäss Anspruch 1, **dadurch gekennzeichnet, dass** das Herausnehmen aus der ersten Sichtformhälfte (22) und das Einlegen in die Aufnahmeformhälfte (26) mittels Fassen zumindest eines am Sichtteil (1) stehen gelassenen Angusszapfens (4) ausgeführt wird.

3. Zweischicht-Spritzgussverfahren gemäss Anspruch 2, **dadurch gekennzeichnet, dass** der Sichtteil (1) beim Einlegen in die Aufnahmeformhälfte (26) mittels zumindest eines am Sichtteil (1) stehen gelassenen Angusszapfens (4) zentriert wird.

4. Zweischitht-Spritzgussuverfahren gemäss einem der vorhergehenden Ansprüche, **dadurch gekennzeichnet, dass** der oder die Funktionsteile (10) des mit diesem Verfahren hergestellten Kunststoff-Bauteils andere physikalische oder chemische Kunststoffeigenschaften aufweisen als der oder die Sichtteile (1).

5. Zweischicht-Spritzgussverfahren gemäss einem der vorhergehenden Ansprüche, **dadurch gekennzeichnet, dass** die Effektpigmente als Farbkonzentrat vorgemischt und als Masterbatch oder Flüssigdispersion in den Einzug einer Spritzgusschnecke dosiert werden bzw. dass durch Compoundieren ein entsprechender Kunststoff-Granulat hergestellt und dieses Granulat so an der Spritzgussmaschine eingesetzt wird.

6. Zweischicht-Spritzgussverfahren gemäss einem der vorhergehenden Ansprüche, **dadurch gekennzeichnet, dass** die Effektpigmente ausgewählt sind aus einer Gruppe, die Metallicpigmente insbesondere ungefärbte oder gefärbte Aluminiumfiltter oder Aluminium bzw. Goldbronze Pigmente, Interferenzpigmente, Periglanzpigmente, mineralischen Glimmer und Mischungen davon umfasst.

7. Zweischicht-Spritzgussverfahren gemäss Anspruch 6, **dadurch gekennzeichnet, dass** die Metallicpigmente ausgewählt sind aus einer Gruppe, die ungefärbte und farbig lackierte Aluminiumflitter sowie Aluminium- und Goldbronze Pigmente umfasst.

8. Zweischicht-Spritzgussverfahren gemäss einem der vorhergehenden Ansprüche, **dadurch gekennzeichnet, dass** die Kunststoff-Formmasse für den Sichtteil (1) zumindest ein transparentes Polymer umfasst, das aus einer Gruppe von Polymeren ausgewählt ist, welche Polyamide oder Copolyamide bzw. deren Mischungen oder Blends umfasst, die aus Monomeren ausgewählt aus folgender Gruppe hergestellt sind:
- verzweigte oder unverzweigte aliphatische Diamine mit 6 bis 14 C-Atomen;
- cycloaliphatische Diamine mit 6 bis 22 C-Atomen;
- araliphatische Diamine mit 8 bis 22 C-Atomen;
- verzweigte oder unverzweigte aliphatische Dicarbonsäuren mit 6 bis 22 C-Atomen;
- cycloaliphatische Dicarbonsäuren mit 6 bis, 22 C-Atomen;
- araliphatische Dicarbonsäuren mit 8 bis 22 C-Atomen;
- aromatische Dicarbonsäuren mit 8 bis 22 mit 8 bis 22 C-Atomen;
- Lactame mit 6 bis 12 C-Atomen bzw. entsprechende ω-Aminocarbonsäuren.

9. Zweischicht-Spritzgussverfahren gemäss einem der vorhergehenden Ansprüche, **dadurch gekennzeichnet, dass** die Kunststoff-Formmasse für den Sichtteil (1) zumindest ein transparentes Polymer umfasst, das aus einer Gruppe von Polymeren ausgewählt ist, welche PA MACM 12, PA PACM 12, PA 12/MACMI und PA MACM/PACM 12 sowie Blends derselben umfasst.

10. Zweischicht-Spritzgussverfahren gemäss einem der vorhergehenden Ansprüche, **dadurch gekennzeichnet, dass** der Kunststoff-Formmasse für den Sichtteil (1) zumindest ein Additiv, ausgewählt aus der Gruppe der UV-Stabilisatoren, UV-Absorber und deren Mischungen, zugemischt wird.

11. Zweischicht-Spritzgussverfahren gemäss einem der vorhergehenden Ansprüche, **dadurch gekennzeichnet, dass** beim Spritzgiessen des Sichtteils (1) die Spritzprägetechnik eingesetzt wird.

12. Zweischicht-Spritzgussvefahren gemäss einem der vorhergehenden Ansprüche, **dadurch gekennzeichnet, dass** die Kunststoff-Formmasse für den Funktionsteil (10) zumindest ein spritzgussfähiges Polymer umfasst, das aus einer Gruppe von Polymeren ausgewählt ist, welche Polyamide, Polyester, Polyolefine bzw. Polycarbonate, thermoplastische Elastomere, Styrolblockcopolymere, Silikone, Acrylnitril-Butadien-Styrol-Polymerisate, PVC bzw. deren Blends oder Recycling-Produkte umfasst.

13. Zweischicht-Spritzgussverfahren gemäss einem der vorgehenden Ansprüche, **dadurch gekennzeichnet, dass** Kunststoff-Formmasse für den Funktionsteil (10) zumindest ein spritzgussfähiges Polymer umfasst, das aus einer Gruppe von Polymeren gemäss Anspruch 12 ausgewählt ist oder aus einem Blend, bei dem zumindest eine der Blendkomponenten für die Verbundhaftung zum Sichtteil (1) sorgt.

14. Zweischicht-Spritzgüssverfahren gemäss Anspruch 12 oder 13, **dadurch gekennzeichnet, dass** die Kunststoff-Formmasse für den Funktionsteil (10) ein Polymer umfasst, das identisch ist mit einem in der Formmasse für den Sichtteil (1) enthaltenen Polymer.

15. Zweischicht-Spritzgussverfahren gemäss einem der vorhergehenden Ansprüche, **dadurch gekennzeichnet, dass** der Kunststoff-Formmasse für den Funktionsteil (10) und/oder der Formmasse für den Sichtteil (1), zum Verbessern der Verbundhaftung zwischen Funktionsteil (10) und Sichtteil (1), ein haftungsvermittelnder Modifikator zugemischt wird.

16. Verfahren zum Herstellen von Gehäusen, Gehäuseteilen und/oder andere Teilen von Elektro-, Elektronik-, Telekommunikations-, Sicherheitstechnik-, Medizinaltechnik-, Haushalts- oder Körperpflegegeräten unter Verwerdung des Zweischicht-Spritzgussverfahrens gemäss einem der Ansprüche 1 bis 15.

17. Verfahren zum Herstellen von Sport- und/oder Freizeitgeräten, Modeaccessoires, Spielzeugen bzw. Teilen davon unter Verwendung des Zweischicht-Spritzgussverfahrens gemäss einem der Ansprüche 1 bis 15.

18. Verfahren zum Herstellen von Design- und/oder Verkleidungselementen an Bauten, Verkehrswegen oder Fahrzeugen unter Verwendung des Zweischicht-Spritzgussverfahrens gemäss einem der Ansprüche 1 bis 15.

19. Verfahren zum Herstellen von optischen Hilfsmitteln, Verglasungen, Möbeln und/oder Verpackungsteilen unter Verwendung des Zweischicht-Spritzgussverfahrens gemäss einem der Ansprüche 1 bis 15.

## Claims

1. Double-layer injection-molding method for producing plastic parts consisting in their cross section of a display part (1) and a functional part (10) from plastic molding compounds which can be processed in a thermoplastic way, comprising at least one display part (1) and at least one functional part (10), the plastic molding compound for the display part (1) comprising a transparent or translucent matrix with admixed effect pigments, the injection molding method comprising the following steps:
(a) injection molding and allowing the plastic molding component of the at least one display part (1) with a display surface (2) and spray surface (3) averted therefrom to solidify in a first mould (20), which comprises a first cavity (21) that is defined by a first display mould half (22) and a first spray mould half (23);
(b) opening of the first mould (20) along a severing plane (24) by moving away the first display mould half (22) from the first spray mould half (23);
(c) closing a second mould (25) with the at least one display part (1) in a second cavity (28), which is defined by a receiving mould half (26) with the display part (1) and a second spray mould half (27);
(d) injection molding and allow the plastic molding compound of the functional part (10) on the spray surface (3) of the at least one display part (1) to solidify by entering into an interlayer bonding between display part (1) and functional part (10), and
(e) opening of the second mould (25) and removing the component,
**characterized in that** the receiving mould half (26) differs from the first display mould half (22) and the display part (1) is removed after the first injection molding process according to step (a) from the first display mould half (22) and is placed for the second injection molding process according to step (d) into the receiving mould half (26), a single injection nozzle (5) which is positioned in a flow-optimized way or at least two injection nozzles being used per display part (1) in a cascade injection molding process for preventing irregularities such as flow lines and/or weld lines, and that the plastic molding compound for the display part (1) comprises at least one transparent polymer which is chosen from the group of polymers which comprises polyamides comprising aliphatic, cycloaliphatic and/or aromatic monomers, cyclic olefin copolymers, polymethyl methacrylate, polymethyl methacrylimide, polycarbonate as well as polycarbonate copolymers and their blends, polystyrene and acrylonitrile butadiene styrene polymerizates, styrene acrylonitrile, acrylonitrile styrene and other styrene copolymers and their blends, cellulose ester, polyimides and polyetherimides, polysulphones and polyethersulphones, polyphenylenes, polyacrylates and mixtures and blends of said polymers, the display part (1) being produced with a substantially even layer thickness and thinner than the functional part (10) supporting and stabilizing said display part (1).

2. Double-layer injection-molding method according to claim 1, **characterized in that** the removal of the first display mould half (22) and the insertion into the receiving mould half (26) is performed by grasping at least one sprue pin (4) which has been left standing on the display part (1).

3. Double-layer injection-molding method according to claim 2, **characterized in that** the display part (1) is centered during the insertion into the receiving mould half (26) by means of a sprue pin (4) which has been left standing on the display part (1).

4. Double-layer injection-molding method according to one of the preceding claims, **characterized in that** the functional part(s) (10) of the plastic component produced by this method has/have other physical or chemical plastic properties than the display part(s) (1).

5. Double-layer injection-molding method according to one of the preceding claims, **characterized in that** the effect pigments are premixed as dye concentrate and are dosed as a master batch or liquid dispersion into the feeder of an injection-molding screw or that a respective plastic granulated material is produced by compounding and said granulated material is thus used in the injection-molding machine.

6. Double-layer injection-molding method according to one of the preceding claims, **characterized in that** the effect pigments are chosen from a group which comprises metallic pigments, especially colorless or colored aluminum flitter or aluminum or gold bronze pigments, interference pigments, pearly luster pigments, mineral mica and mixtures thereof.

7. Double-layer injection-molding method according to claim 6, **characterized in that** the metallic pigments are chosen from a group which comprises colorless aluminum flitter and such lacquered in color as well as aluminum and gold bronze pigments.

8. Double-layer injection-molding method according to one of the preceding claims, **characterized in that** the plastic molding compound for the display part (1) comprises at least one transparent polymer which is chosen from a group of polymers that comprises polyamides or copolyamides or their mixtures or blends which are made of monomers chosen from the following group:
- branched or unbranched aliphatic diamines with 6 to 14 C atoms;
- cycloaliphatic diamines with 6 to 22 C atoms;
- araliphatic diamines with 8 to 22 C atoms;
- branched or unbranched aliphatic dicarboxylic acids with 6 to 22 C atoms;
- cycloaliphatic dicarboxylic acids with 6 to 22 C atoms;
- araliphatic dicarboxylic acids with 8 to 22 C atoms;
- aromatic dicarboxylic acids with 8 to 22 C atoms;
- lactams with 6 to 12 C atoms or respective ω-amino carboxylic acids.

9. Double-layer injection-molding method according to one of the preceding claims, **characterized in that** the plastic molding compound for the display part (1) comprises at least one transparent polymer which is chosen from a group of polymers that comprises PA MACM 12, PA PACM 12, PA 12/MACMI and PA MACM/PACM 12 and blends thereof.

10. Double-layer injection-molding method according to one of the preceding claims, **characterized in that** at least one additive which is chosen from the group of UV stabilizers, UV absorbers and their mixtures is admixed to the plastic molding compound for the display part (1).

11. Double-layer injection-molding method according to one of the preceding claims, **characterized in that** injection stamping technique is used during the injection molding of the display part (1).

12. Double-layer injection-molding method according to one of the preceding claims, **characterized in that** the plastic molding compound for the functional part (10) comprises at least one polymer, which is capable of being injection molded, and which is selected from a group of polymers that comprises polyamides, polyesters, polyolefins or polycarbonates, thermoplastic elastomers, styrene block copolymers, silicones, acrylonitrile butadiene styrene polymerizates, PVC and its blends or recycling products.

13. Double-layer injection-molding method according to one of the preceding claims, **characterized in that** the plastic molding compound for the functional part (10) comprises at least one polymer which is capable of being injection molded, and which is chosen from a group of polymers according to claim 12 or from a blend, in which at least one of the blend components ensures the interlayer bonding with the display part (1).

14. Double-layer injection-molding method according to claim 12 or 13, **characterized in that** the plastic molding compound for the function part (10) comprises a polymer which is identical with a polymer contained in the molding compound for the display part (1).

15. Double-layer injection-molding method according to one of the preceding claims, **characterized in that** an adhesion-promoting modifier is admixed to the plastic molding compound for the function part (10) and/or the molding compound for the display part (1) for improving interlayer adhesion between functional part (10) and display part (1).

16. Method for producing housings, parts of housings and/or other parts of electric, electronic, telecommunications, safety-engineering, medical-engineering, household and body-care appliances by using the double-layer injection-molding method according to one of the claims 1 to 15.

17. Method for producing sports and/or recreational appliances, fashion accessories, toys and parts thereof by using the double-layer injection-molding method according to one of the claims 1 to 15.

18. Method for producing design and/or lining elements on buildings, traffic routes or vehicles by using the double-layer injection-molding method according to one of the claims 1 to 15.

19. Method for producing optical auxiliary means, glazing, furniture and/or parts of packaging by using the double-layer injection-molding method according to one of the claims 1 to 15.

## Revendications

1. Procédé de moulage par injection en deux couches pour produire des composants en matière plastique, qui se composent dans leur section transversale d'une partie visible (1) et d'une partie fonctionnelle (10), à partir de masses de moulage en matière plastique pouvant être façonnées par voie thermoplastique, comportant au moins une partie visible (1) et au moins une partie fonctionnelle (10), dans lequel la masse de moulage en matière plastique comprend pour la partie visible (1) une matrice transparente ou translucide avec des pigments à effet ajoutés en mélange, dans lequel le procédé de moulage par injection comprend les étapes suivantes:
(a) moulage par injection et mise à solidifier de la masse de moulage en matière plastique d'au moins une partie visible (1) ayant une surface visible (2) et une surface d'injection (3) éloignée de celle-ci dans un premier moule (20) comportant une première cavité (21) qui est définie par une première moitié de moule côté visible (22) et une première moitié de moule côté injection (23);
(b) ouverture du premier moule (20) le long d'un plan de séparation (24) par déplacement de la première moitié de moule côté visible (22) de la première moitié de moule côté injection (23);
(c) fermeture d'un second moule (25) avec la partie visible (1) au moins au nombre de une dans une seconde cavité (28), qui est défini par une moitié de moule de réception (26) avec la partie visible (1) et une seconde moitié de moule côté injection (27);
(d) moulage par injection et mise à solidifier de la masse de moulage en matière plastique de la partie fonctionnelle (10) sur la surface d'injection (3) de la partie visible (1) au moins au nombre de une en réalisant une cohérence entre couches entre la partie visible (1) et la partie fonctionnelle (10); et
(e) ouverture du second moule (25) et retrait du composant,
**caractérisé en ce que** la moitié de moule de réception (26) est différente de la première moitié de moule côté visible (22) et que la partie visible (1) est retirée après le premier procédé de moulage par injection selon l'étape (a) de la moitié de moule côté visible (22) et est déposée pour le second procédé de moulage par injection selon l'étape (d) dans la moitié de moule de réception (26), suite à quoi par partie visible (1), pour éviter des irrégularités comme des traces d'écoulement et/ou des coulées de liaison, on utilise une buse d'injection unique (5) positionnée de façon favorable à l'écoulement ou au moins deux buses d'injection dans un procédé de moulage par injection en cascade, **et en ce que** la masse de moulage en matière plastique pour la partie visible (1) comprend au moins un polymère transparent qui est sélectionné dans un groupe de polymères qui comprend des polyamides comportant des monomères aliphatiques, cycloaliphatiques et/ou aromatiques, des copolymères d'oléfine cycliques, du méthacrylate de polyméthyle, du méthacrylimide de polyméthyle, du polycarbonate ainsi que des copolymères de polycarbonate et leurs mélanges, du polystyrène et des polymères d'acrylonitrile-butadiène-styrène, du styrène-acrylonitrile, de l'acrylonitrile-styrène et d'autres copolymères de styrène et leurs mélanges, des esters de cellulose, des polyimides et des polyétherimides, des polysulfones et des polyéthersulfones, des polyphénylènes, des polyacrylates ainsi que des compositions et mélanges de ces polymères, la partie visible (1) étant fabriquée avec une épaisseur de couche essentiellement régulière et plus mince que la partie fonctionnelle (10) portante et stabilisante cette partie visible (1).

2. Procédé de moulage par injection en deux couches selon la revendication 1, **caractérisé en ce que** le retrait depuis la première moitié de moule côté visible (22) et le placement dans la moitié de moule de réception (26) sont exécutés au moyen de saisir d'au moins un tourillon de moule (4) dressé au niveau de la partie visible (1).

3. Procédé de moulage par injection en deux couches selon la revendication 2, **caractérisé en ce que** la partie visible (1), lors du placement dans la moitié de moule de réception (26), est centrée au moyen d'au moins un tourillon de moule (4) dressé au niveau de la partie visible.

4. Procédé de moulage par injection en deux couches selon l'une des revendications précédentes, **caractérisé en ce que** la ou les parties fonctionnelles (10) du composant en matière plastique fabriqué selon ce procédé présente(nt) d'autres propriétés plastiques physiques ou chimiques que celles de la ou des parties visibles (1).

5. Procédé de moulage par injection en deux couches selon l'une des revendications précédentes, **caractérisé en ce que** les pigments à effet sont pré-mélangés en tant que concentré de couleur et sont dosés en tant que couleur pré-dispersée ou dispersion fluide dans l'entrée d'une vis sans fin de moulage par injection ou **en ce que** l'on fabrique par composition un granulé de plastique correspondant et que l'on utilise ainsi ce granulé dans la machine de moulage par injection.

6. Procédé de moulage par injection en deux couches selon l'une des revendications précédentes, **caractérisé en ce que** les pigments à effet sont sélectionnés dans un groupe qui comprend des pigments métalliques, en particulier des paillettes d'aluminium non colorées ou colorées ou des pigments d'aluminium ou de bronze d'or, des pigments d'interférence, des pigments nacrés, des micas minéraux et des mélanges de ceux-ci.

7. Procédé de moulage par injection en deux couches selon la revendication 6, **caractérisé en ce que** les pigments métalliques sont sélectionnés dans un groupe qui comprend des paillettes d'aluminium non colorées et peintes en couleur, ainsi que des pigments d'aluminium et de bronze d'or.

8. Procédé de moulage par injection en deux couches selon l'une des revendications précédentes, **caractérisé en ce que** la masse de moulage en matière plastique pour la partie visible (1) comprend au moins un polymère transparent qui est sélectionné dans un groupe de polymères qui comprend des polyamides ou des copolyamides ou leurs compositions ou mélanges, qui sont fabriqués à partir de monomères sélectionnés dans le groupe suivant:
- diamines aliphatiques ramifiées ou non ramifiées comportant 6 à 14 atomes de C ;
- diamines cycloaliphatiques comportant 6 à 22 atomes de C ;
- diamines araliphatiques comportant 8 à 22 atomes de C ;
- acides dicarboxyliques aliphatiques ramifiés ou non ramifiés comportant 6 à 22 atomes de C ;
- acides dicarboxyliques cycloaliphatiques comportant 6 à 22 atomes de C;
- acides dicarboxyliques araliphatiques comportant 8 à 22 atomes de C ;
- acides dicarboxyliques aromatiques comportant 8 à 22 atomes de C ;
- lactames comportant 6 à 12 atomes de C ou acides ω-amino-carboxyliques correspondants.

9. Procédé de moulage par injection en deux couches selon l'une des revendications précédentes, **caractérisé en ce que** la masse de moulage en matière plastique pour la partie visible (1) comprend au moins un polymère transparent qui est sélectionné dans un groupe de polymères qui comprend PA MACM 12, PA PACM 12, PA 12/MACMI et PA MACM/PACM 12, ainsi que leurs mélanges.

10. Procédé de moulage par injection en deux couches selon l'une des revendications précédentes, **caractérisé en ce que** l'on ajoute à la masse de moulage en matière plastique pour la partie visible (1) au moins un additif sélectionné dans le groupe des agents de stabilisation des UV, des absorbeurs des rayons UV, et de leurs mélanges.

11. Procédé de moulage par injection en deux couches selon l'une des revendications précédentes, **caractérisé en ce que** lors du moulage de la partie visible (1), on utilise la technique de l'injection-compression.

12. Procédé de moulage par injection en deux couches selon l'une des revendications précédentes, **caractérisé en ce que** la masse de moulage en matière plastique pour la partie fonctionnelle (10) comprend au moins un polymère apte au moulage par injection qui est sélectionné dans un groupe de polymères qui comprend des polyamides, des polyesters, des polyoléfines ou des polycarbonates, des élastomères thermoplastiques, des copolymères séquencés de styrène, des silicones, des polymères d'acrylonitrile-butadiène-styrène, des PVC ou leurs mélanges ou produits de recyclage.

13. Procédé de moulage par injection en deux couches selon l'une des revendications précédentes, **caractérisé en ce que** la masse de moulage en matière plastique pour la partie fonctionnelle (10) comprend au moins un polymère apte au moulage par injection sélectionné dans un groupe de polymères selon la revendication 12 ou dans un mélange dans lequel au moins un des composants du mélange assure la cohérence entre couches avec la partie visible (1).

14. Procédé de moulage par injection en deux couches selon la revendication 12 ou 13, **caractérisé en ce que** la masse de moulage en matière plastique pour la partie fonctionnelle (10) comprend un polymère qui est identique à un polymère contenu dans la masse de moulage pour la partie visible (1).

15. Procédé de moulage par injection en deux couches selon l'une des revendications précédentes, **caractérisé en ce que** l'on mélange à la masse de moulage en matière plastique pour la partie fonctionnelle (10) et/ou à la masse de moulage pour la partie visible (1), pour améliorer la cohérence entre couches entre la partie fonctionnelle (10) et la partie visible (1), un modificateur conférant une adhésion.

16. Procédé de fabrication de boîtiers, de parties de boîtier, et/ou d'autres pièces d'appareils électriques, électroniques, de télécommunication, de la technique de sécurité, de la technique médicale, ménagers ou de soins du corps en utilisant le procédé de moulage par injection en deux couches selon l'une des revendications 1 à 15.

17. Procédé de fabrication d'appareils de sport et/ou de loisirs, d'accessoires de mode, de jouets ou de parties de ceux-ci en utilisant le procédé de moulage par injection en deux couches selon l'une des revendications 1 à 15.

18. Procédé de fabrication d'éléments de design ou de revêtement au niveau de bâtiments, de voies de circulation ou de véhicules en utilisant le procédé de moulage par injection en deux couches selon l'une des revendications 1 à 15.

19. Procédé de fabrication d'accessoires optiques, de vitrages, de meubles ou de parties d'emballage en utilisant le procédé de moulage par injection en deux couches selon l'une des revendications 1 à 15.
